# EUROPEAN PATENT SPECIFICATION

(11) **EP 1 731 578 B1**
(45) Date of publication and mention of the grant of the patent: **12.11.2008**
(21) Application number: 05012236.5
(22) Date of filing: 07.06.2005
(51) Int. Cl.: C09D 4/00, C07F 9/50, C07C 309/18

(54) **Primer for cyanoacrylate adhesive**
Primer für Cyanoacrylatkleber
Primaire pour adhésive à base de cyanoacrylate

(43) Date of publication of application: 13.12.2006
(73) Proprietor: Alteco Inc., Ibaraki-shi Osaka (JP)
(72) Inventor: Chikatsune, Keizo, Osaka-shi Osaka (JP); Hamada, Kazufumi, Kobe-shi Hyogo (JP); Kohara, Kazuo, Moriyama-shi Siga (JP)
(74) Representative: Hauck Patent- und Rechtsanwälte

(56) References cited:
- EP-A- 1 421 927

## Description

### BACKGROUND OF THE INVENTION

### Field of the Invention

The present invention relates to a primer for a cyanoacrylate adhesive.

### Prior Art

Cyanoacrylate adhesives hitherto provided have been broadly and much put into practical use industrially or domestically for organic materials such as metal and plastic and for natural stuffs such as stone and wood thanks to quickness of hardening and variation of corresponding objects to undergo adhesion with the adhesive.

However, the conventional cyanoacrylate adhesives are not almighty, i.e. some materials do almost not have adhesion with the conventional cyanoacrylate adhesives, or many materials are not given a predetermined level of adhesion strength with the conventional cyanoacrylate adhesives. To solve the problems, it would be ordinarily possible to provide a pre-treatment or apply a primer. However, in fact, there has been found no such pre-treatment carried out. And a primer is hitherto not employed for a metal surface or nylon.

Moreover, in recent times, there exist various and many chemicals and substances that are argued of questions or doubts regarding safety or restrained from using practically in relation to the environmental problems. Therefore, development of primers should meet many regulations and rules. In particular, the conventional primer was regarded as problematic in use for adhering in the manufacture of tools and devices for medical purpose.

To overcome the above problems, the inventor has researched and studied minutely and developed a primer that shows an excellently high safety and largely improves adhesion strength of cyanoacrylate adhesives.

EP 1 421 927 A1 discloses a dental self-etching primer. The self-etching primer agent is used for surface treatment of dentin or enamel of tooth in case of bonding a composite resin to dentin or enamel with a bonding agent or in case of bonding a metal or an orthodontic bracket to dentin or enamel of tooth with an adhesive resin cement. The primer agent comprises an aqueous solution of a methacrylic acid derivative represented by formula 1 in EP 1 421 927 A1.

The problem of the invention is to improve the adhesive strength by using a primer for cyanoacrylate adhesives.

The problem is solved according to claim 1.

### ETAILED DESCRIPTION OF THE INVENTION

Most of the conventional primer has the effective content in liquid state and is thereby applied on the assumption that it broadly extends over the whole surface subjected to adhesion. Transcending beyond the conventional concept, the inventor conceived such feature that crystalline substances are adhered on the objective surface not all over the whole but as dotted or studded, in detail, microscopically quite sparsely, in such manner that a diluted solution dissolved by solvent is applied and the solvent is then volatilized.

It has been found such fact that the dotted crystalline substances unexpectedly effectively function to provide high adhesion. The reason although not yet specified is so inferred that the polymer of adhesive hardens from the state of studded microcrystallines to grow quickly, and in the other region than that of the crystalline particles the adhesive and the objective material are not separated but directly contact with each other, whereby enabling the whole surface to undergo adhesion very much quickly.

The main content of the primer according to the present invention is amphoteric compounds, i.e., those including in molecules both of acid and amines, which is to become the foregoing microcrystallines.

Acid referred to here may be carboxyl group (COOH) or sulfonic acid group (SO₃H).

Amines may employ primary amines, secondary amines or tertiary amines.

A substances containing in molecules carboxyl group and primary amines is typically amino acid. The present invention started from the inventor's discovery of the fact that amino acid effectively functions as a primer for cyanoacrylate adhesives.

Amino acid may employ aspartic acid, glutamic acid, glutamine, cysteine, cystine, phenylalanine, threonine, thyrosin, serine, hydroxyproline, methionine, tryptophan, citrulline, isoleucine, valine, glycine, alanine, β-alanine, histidine, lysine, leucine, arginine, etc.

Those containing in molecules carboxyl group and secondary amines may be typically proline, which is one of essential amino acids and called separately cyclic amino acids.

Next, a substance containing inmolecules carboxyl group and tertiary amines may be nicotine acid.

Those containing in molecules sulfonic acid group and primary amines may be taurine, which is regarded as a kind of amino acids. Those containing in molecules sulfonic acid group and secondary amines may be N-methyltaurine.

In the present invention, those acid groups and amines may exist in molecules plurally, for example, in the form of diamine, or dicarboxylic acid.

These amphoteric compounds may include ester with lower alcohol in the acid part. In this case, ester is suitably usable in acidic state.

In formulation of the primer, by adding ethanol (EtOH) or isopropyl alcohol (IPA), the acidic region is locally esterified in a comparatively short time.

The present invention dissolves the amphoteric compounds in solvent (as dispersed or emulsified, the same meaning hereunder) and mix other compositions as or when required, thereby providing the primer. The primer is applied or coated or sprayed so as to allow the amphoteric compounds to be uniformly adhered in a proper quantity.

Dissolution concentration of the amphoteric compounds the main content of the present invention is 0.0001 - 0.02mol/100g (the whole quantity), and preferably 0.001 - 0.005mol/100g. A dilute solution is preferable for the purpose of avoiding that the amphoteric compounds (i.e., the primer) is applied thickly to hinder the adhesive from contacting with the objective material.

A solvent for dissolving the amphoteric compounds is not particularly defined but may be preferably water or alcohol, in particular, water itself, alcohol itself or an aqueous solution of alcohol. Furthermore, organic solvent such as ketone, ester, saturated hydrocarbon or the like, or combination(s) or mixture(s) of those may be usable. Among them water is more safe while alcohol is more quickly dried and shows an excellent wetting on the surfaces of organic substances, metal plating. After considering all the factors, preferably is a thick aqueous solution such as ethanol, propanol or the like (concentration: 50 - 90wt%).

The foregoing saturated hydrocarbon may be cyclohexane, methylcyclohexane, cyclopentane, normal hexane, etc. Those may be used solely as above but may be preferably used by adding 5 - 30 wt% into an aqueous solution of alcohol.

The rate of the above solvent in the whole of primer is preferably 90 - 95 wt% or more.

The primer made of amphoteric compounds according to the present invention may be mixed with various contents other than the solvent, such as acid, alkali, furthermore, any other than these not preventing hardening such as perfume, pigment, hardening catalyst.

Acid and alkali are mixed into the invention to improve solubility and adhesion strength and may employ sodium hydroxide, potassium hydroxide, ammonium hydroxide, hydrochloric acid, sulfulic acid, acetic acid or the like. Quantity of mixture may be preferably identical in mol to that of corresponding groups (amino group, carboxyl group, etc) in the amphoteric compounds but not defined particularly. By adding those acid and alkali, pH is adjusted to enable selecting any optimum pH for the objective materials subjected to adhesion.

In case that primer itself has higher pH (about pH7.5 - 11.0), the primer generally quickly hardens. But, a comparatively low pH is suitable for metal surface or the like. The objective materials subjected to adhesion are each differently influenced with pH. Such influences with pH is able to be previously measured, and suitable values are found through try and error and used to adjust adhesion strength.

One of characteristics of the present invention is that the foregoing amphoteric compounds are basically harmless and do not pollute environments. This is a high advantage in use for the medical purpose as foregoing as well as for other cases. Generally, harmful organic solvent does not readily dissolve. Thus, safety is ensured in this regard, too.

Quantity of applying the primer may be enough to be sprayed once or applied once using a brush and may be adjustable by means of specific concentration.

Cyanoacrylate adhesives in the present invention may be alkyl-α-cyanoacrylate such as methyl-α-cyanoacrylate, ethyl-α-cyanoacrylate, butyl-α-cyanoacrylate, or octyl- α-cyanoacrylate, or cyclohexyl-α-cyanoacrylate, methoxy-α-cyanoacrylate.

### Preferable Embodiments

Next, the present invention will be detailed with referring to specific example.

Tensile shear/bond (adhesion) strength with and without using the primer according to the present invention with respect to various objective materials are compared to research the effects. (Comparison with other primer than the present invention was tried but not made since primers for those objective materials are not commercially available and not known.)

As cyanoacrylate adhesive, etyl-α-cyanoacrylate (Altico Inc. : E50) was made use of.

Experiments were carried out in such manner that primers (Primer Nos. 1 - 21 in Table 1) were applied by brush on an end part 12.5mm width of two test pieces (100mm x 25mm x 1.6mm ((in case of metal) or x 2mm (plastic)). After drying (usually 10 - 60sec), the adhesive was applied in the form of drops on the primer applied surface of one of test pieces. Immediately, the other test piece is fit to the first one with the primer applied surfaces being into contact with each other (with the other areas than the primer applied surfaces being not engaged mutually) and to be lightly pressurized. They were kept as they are for 10 seconds to make respective samples. According to the method defined by Japanese Industry Standard (JIS K6861: test method for α-cyanoacrylate adhesive), the samples were left to stand for 24 hours and then subjected to measurement of tensile shear/bond(adhesion) strength.

As seen in Table1, the primers have 28 kinds of amphoteric compounds as the main content. Other contents are as shown in Table 1.

Tables 2 and 3 show tensile shear/bond (adhesion) strength shown in 62 kinds of tests applying 28 kinds of primers in Table 1 on various test pieces (the objective materials subjected to adhesion). The same tests by similarly using various test pieces without using primers were carried out. Test results of tensile shear/bond strength in the tests is as shown in Table 4.

Table 4 shows that the objective metal subjected to the tests expressed strength merely 3 - 8N/mm² (30 - 80kgf/cm²), and plastics 1 - 5N/mm². In case that the objective material is fragile or weak, break of materials was accompanied occasionally.

Examples shown in Tables 2 and 3 expresses that a steel plate and chrome plated surface have considerably improved strength 10 - 25N/mm², and plastic surface 2 - 7N/mm² strength with often accompanied with materials break but largely improved in comparison with those without using primers, as seen.

### Effects of the Invention

The primer according to the present invention has the following advantages.
(1) having sufficient effects as primers.
(2) being basically safe without much taking directly or putting into eyes directly.
(3) being unnecessary to take care of adhesion on skin of hands or the like when applying, and being capable of being directly applied on human body (nails or bones).
(4) By use of the primer of the invention, any materials which is not enabled to have adhesion without using primers are allowed to be adhered or to have completion of adhesion in a shorter time (time required for hardening is shorter).
(5) By use of pH adjustment agent, even in case of using the same amphoteric compounds, the rate of hardening and bond (adhesion) strength are readily adjustable.

**[ Table 1 ]**

| Pr | Name | Amphoteric c. | NaOH | HCl | Water | IPA | EtOH | MCH | Act | MF | pH |
|---|---|---|---|---|---|---|---|---|---|---|---|
| 1 | Arginine | 0.174 (0.001mol) | - | - | 19.83 | 40.00 | 40.00 | - | - | - | 10.9 |
| 2 | L-methionine | 0.149 (0.001 mol) | 0.04 (0.001 mol) | - | 15.96 | 44.00 | 39.85 | - | - | - | 11.7 |
| 3 | L-methionine | 0.149 (0.001 mol) | - | 0.036 (0.001 mol) | 10.96 | - | 88.85 | - | - | - | 2.9 |
| 4 | L-aspartic acid | 0.266 (0.002mol) | 0.16 (0.004mol) | - | 28.84 | - | 70.73 | - | - | - | 13.5 |
| 5 | β -alanine | 0.178 (0.002mol) | 0.04 (0.001 mol) | - | 59.78 | - | 40.00 | - | - | - | 10.2 |
| 6 | L-lysine | 0.146 (0.001 mol) | - | 0.04 (0.0011 mol) | 31.00 | 68.81 | - | - | - | - | 3.9 |
| 7 | Ornithine | 0.132 (0.001 mol) | - | 0.036 (0.001 mol) | 22.00 | 77.83 | - | - | - | - | 5.6 |
| 8 | L-leucine | 0.131 (0.001 mol) | 0.04 (0.001 mol) | - | 24.96 | 25.30 | 49.57 | - | - | - | 11.8 |
| 9 | L-leucine | 0.131 (0.001 mol) | 0.04 (0.001 mol) | - | 9.96 | 30.00 | 40.00 | 19.87 | - | - | 12.3 |
| 10 | L-leucine | 0.131 (0.001 mol) | - | 0.036 (0.001 mol) | 14.97 | 45.00 | 39.86 | - | - | - | 3.2 |
| 11 | Cysteine | 0.121 (0.001 mol) | - | - | 15.00 | 84.88 | - | - | - | - | 6.5 |
| 12 | Serine | 0.105 (0.001 mol) | 0.056 (0.001 mol) | - | 15.94 | - | 83.90 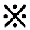 | - | - | - | 11.0 |
| 13 | Serine | 0.105 (0.001 mol) | 0.02 (0.0005mol) | - | 14.98 | 45.00 | 39.90 | - | - | - | 9.9 |
| 14 | Glycylglycine | 0.132 (0.001 mol) | - | 0.036 (0.001 mol) | 9.96 | - | 89.87 | - | - | - | 3.3 |
| 15 | Glycine | 0.15 (0.002mol) | - | 0.036 (0.001mol) | 99.81 | - | - | - | - | - | 3.7 |
| 16 | Glycine | 0.15 (0.002mol) | 0.077 | - | 11.92 | - | 87.85 | - | - | - | 11.0 |
| 17 | Phenylalanine | 0.165 (0.001 mol) | - | 0.036 (0.001 mol) | 10.92 | 40.00 | 28.88 | 20.0 | - | - | 2.6 |
| 18 | Glutamine | 0.146 (0.001mol) | - | 0.036 (0.001 mol) | 14.82 | - | 85.00 | - | - | - | 3.0 |
| 18 | Glutamine | 0.146 (0.001 mol) | 0.04 (0.001mol) | - | 14.81 | - | 85.00 | - | - | - | 11.5 |
| 20 | Diethyl glutamate | 0.203 (0.001 mol) | - | 0.036 (0.001 mol) | 7.76 | 72.0 | - | 20.0 | - | - | 3.8 |
| 21 | Proline | 0.23 (0.002mol) | 0.08 (0.002mol) | - | 16.92 | - | 82.77 | - | - | - | 11.7 |
| 22 | Nicotinic acid | 0.246 (0.002mol) | - | 0.073 (0.002mol) | 11.93 | - | 87.76 | - | - | - | 2.8 |
| 23 | Nicotinic acid | 0.246 (0.002mol) | 0.08 (0.002mol) | - | 11.92 | - | 87.76 | - | - | - | 8.2 |
| 24 | Taurine | 0.25 (0.002mol) | - | 0.036 (0.001 mol) | 30,94 | - | 68.77 | - | - | - | 2.4 |
| 25 | Taurine | 0.25 (0.002mol) | 0.08 (0.002mol) | - | 11.92 | - | 87.76 | - | - | - | 10.5 |
| 26 | N-methyltaurine | 0.138 (0.001 mol) | 0.04 (0.001 mol) | - | 10.96 | - | 88.87 | - | - | - | 9.0 |
| 27 | Pyroglutamic acid | 0.129 (0.001 mol) | 0.04 (0.001 mol) | - | 15.83 | - | - | - | 84.00 | - | 11.2 |
| 28 | Pyroglutamic acid | 0.129 (0.001 mol) | - | 0.036 (0.001mol) | 15.84 | - | - | - | 54.00 | 30.00 | 1.11 |

| | | | | | | | | | | | |
|---|---|---|---|---|---|---|---|---|---|---|---|
| The unit is g, and total 100.0g. pH is measured with glass electrode at 20°C. Amphoteric c.:Amphoteric compound Pr: Primer No., IPA : Isopropyl alcohol, EtOH : Ethanol, MCH : Methylcyclohexane, Act:Acetone, MF:Methyl formate, 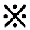 :KOH | | | | | | | | | | | |

**[ Table 2 ]**

| Examples | | | | | |
|---|---|---|---|---|---|
| Example | Primer | pH | A. compound name | Material | T.S.A.S |
| No. | No. | | | | N/mm2 |
| 1 | 1 | 10.9 | Arginine | POM | 3.10 |
| 2 | " | " | " | Urethane rubber | 2.50 |
| 3 | 2 | 11.7 | L-methionine | POM | 2.98 |
| 4 | " | " | " | Urethane rubber | 2.45 |
| 5 | 3 | 2.9 | L-methionine | Steel | 11.2 |
| 6 | " | " | " | SUS 316L | 13.2 |
| 7 | 4 | 13.5 | L-aspartic acid | POM | 2.80 |
| 8 | " | " | " | Urethane rubber | 3.5 |
| 9 | 5 | 10.2 | β-alanine | POM | 2.50 |
| 10 | 6 | 3.9 | L-lysine | Chromium plating | 24.9 |
| 11 | 7 | 5.6 | Ornithine | Chromium plating | 25.0 |
| 12 | 8 | 11.8 | L-leucine | 6-nylon | 6.5 |
| 13 | " | " | " | POM | 3.5 |
| 14 | " | " | " | Urethane rubber | 2.2 |
| 15 | 9 | 12.3 | L-leucine | 6-nylon | 6.1 |
| 16 | 10 | 3.2 | L-leucine | Steel | 15.0 |
| 17 | 11 | 6.5 | Cysteine | Chromium plating | 24.5 |
| 18 | 12 | 11.0 | Serine | POM | 2.10 |
| 19 | 13 | 9.9 | Serine | Urethane rubber | 2.3 |
| 20 | 14 | 3.3 | Glycylglycine | Steel | 18.2 |
| 21 | " | " | " | SUS 316L | 13.6 |
| 22 | " | " | " | PBT | 4.00 |
| 23 | " | " | " | POM | 4.50 |
| 24 | " | " | " | 6-nylon | 7.51 |
| 25 | 15 | 3.7 | Glycine | Steel | 20.0 |
| 26 | " | " | " | Chromium plating | 21.1 |
| 27 | " | " | " | SUS 316L | 13.8 |
| 28 | 16 | 11.0 | Glycine | 6-nylon | 8.00 |
| 29 | " | " | " | PBT | 4.25 |
| 30 | " | " | " | POM | 5.04 |
| 31 | " | " | " | Urethane rubber | 2.70 |

| | | | | | |
|---|---|---|---|---|---|
| A. compound name: Amphoteric compound name T.S.A.S.: Tensile shearing adhesive strength POM: Polyoxy methylene (Polyacetal) PBT: Polybutylene terephthalate, SUS 316L: Stainless steel | | | | | |

**[ Table 3 ]**

| Examples | | | | | |
|---|---|---|---|---|---|
| Example | Primer | pH | A. compound name | Material | T.S.A.S |
| No. | No. | | | | N/mm2 |
| 32 | 17 | 2.6 | Phenylalanine | Steel | 18.2 |
| 33 | " | " | " | SUS 316L | 14.5 |
| 34 | " | " | " | Chromium plating | 23.1 |
| 35 | 18 | 3.0 | Glutamine | Steel | 16.0 |
| 36 | " | " | " | SUS 316L | 13.0 |
| 37 | " | " | " | Chromium plating | 20.6 |
| 38 | 19 | 11.5 | Glutamine | Urethane rubber | 2.3 |
| 39 | 20 | 3.8 | Diethyl glutamate | Steel | 16.9 |
| 40 | " | " | " | SUS 316L | 11.8 |
| 41 | " | " | " | Chromium plating | 21.2 |
| 42 | 21 | 11.7 | Proline | Urethane rubber | 2.5 |
| 43 | " | " | " | PBT | 3.1 |
| 44 | " | " | " | 6-nylon | 6.8 |
| 45 | 22 | 2.8 | Nicotinic acid | Steel | 17.2 |
| 46 | " | | " | SUS 316L | 12.2 |
| 47 | 23 | 8.2 | Nicotinic acid | 6-nylon | 7.08 |
| 48 | " | | " | PBT | 4.88 |
| 49 | " | " | " | POM | 6.99 |
| 50 | 24 | 2.4 | Taurine | Steel | 17.7 |
| 51 | " | " | " | SUS 316L | 17.6 |
| 52 | 25 | 10.5 | Taurine | 6-nylon | 5.50 |
| 53 | " | " | " | PBT | 4.00 |
| 54 | " | " | " | POM | 4.00 |
| 55 | " | " | " | Urethane rubber | 5.10 |
| 56 | 26 | 9.0 | N-methyltaurine | Urethane rubber | 2.80 |
| 57 | 27 | 11.2 | Pyrogultamic acid | 6-nylon | 7.7 |
| 58 | " | " | " | PBT | 4.2 |
| 59 | " | " | " | POM | 5.6 |
| 60 | " | " | " | Urethane rubber | 3.0 |
| 61 | 28 | 1.11 | Pyrogultamic acid | Chromium plating | 20.8 |
| 62 | " | " | " | Steel | 16.5 |

| | | | | | |
|---|---|---|---|---|---|
| A. compound name: Amphoteric compound name T.S.A.S.: Tensile shearing adhesive strength POM: Polyoxy methylene (Polyacetal) PBT: Polybutylene terephthalate, SUS 316L: Stainless steel | | | | | |

**[ Table 4 ]**

| Comparative examples | | | |
|---|---|---|---|
| | Primer | Material | T.S.A.S. |
| | | | N/mm² |
| 1 | none | Steel | 7.71 |
| 2 | none | SUS 316L | 3.72 |
| 3 | none | Chromium plating | 5.60 |
| 4 | none | PBT | 2.50 |
| 5 | none | POM | 2.15 |
| 6 | none | 6-nylon | 5.01 |
| 7 | none | Urethane rubber | 1.35 |

## Claims

1. Use of a primer for cyanoacrylate adhesive wherein the primer comprises amphoteric compounds containing in molecules the following substances:
- carboxyl group or sulfonic acid group, and
- amines,
wherein the amphoteric compounds are diluted by solvent into concentration of 0.0001 to 0.02mol/100g.

2. Use of a primer for cyanoacrylate as set forth in Claim 1 wherein the solvent is water.

3. Use of a primer for cyanoacrylate as set forth in Claim 1 wherein the solvent is an aqueous solution of alcohol.

4. Use of a primer for cyanoacrylate as set forth in Claim 1 wherein the solvent is an organic solvent such as ketone, ester, or saturated hydrocarbon or the like.

5. Use of a primer for cyanoacrylate as set forth in Claim 1 wherein the solvent is a mixture of an aqueous solution with an organic solvent such as ketone, ester, or saturated hydrocarbon or the like.

6. Use of a primer for cyanoacrylate as set forth in Claim 1 through 3 wherein carboxyl group or sulfonic acid group is ester by use of lower alcohol.

## Patentansprüche

1. Verwendung eines Primers für Cyanoakrylatkleber, wobei der Primer amphotere Verbindungen umfasst, die in Molekülen die folgenden Stoffe umfassen:
- Carboxylgruppe oder Sulfonsäuregruppe und
- Amine,
wobei die amphoteren Verbindungen durch Lösungsmittel in einer Konzentration von 0,0001 bis 0,02 Mol/100 g verdünnt werden.

2. Verwendung eines Primers für Cyanoacrylat nach Anspruch 1, wobei das Lösungsmittel Wasser ist.

3. Verwendung eines Primers für Cyanoacrylat nach Anspruch 1, wobei das Lösungsmittel eine wässrige Lösung aus Alkohol ist.

4. Verwendung eines Primers für Cyanoacrylat nach Anspruch 1, wobei das Lösungsmittel ein organisches Lösungsmittel wie Keton, Ester oder gesättigter Kohlenwasserstoff oder Ähnliches ist.

5. Verwendung eines Primers für Cyanoacrylat nach Anspruch 1, wobei das Lösungsmittel eine Mischung aus einer wässrigen Lösung mit einem organischen Lösungsmittel wie Keton, Ester oder gesättigtem Kohlenwasserstoff oder Ähnlichem ist.

6. Verwendung eines Primers für Cyanoacrylat nach Anspruch 1 bis 3, wobei die Carboxylgruppe oder die Sulfonsäuregruppe Ester unter Verwendung eines niederen Alkohols ist.

## Revendications

1. Utilisation d'un primaire pour adhésif à base de cyanoacrylate, le primaire comprenant des composés amphotères contenant dans des molécules les substances suivantes :
- groupe carboxyle ou groupe acide sulfonique et
- amines,
les composés amphotères étant dilués au moyen d'un solvant dans une concentration allant de 0,0001 à 0,02 mol/100 g.

2. Utilisation d'un primaire pour cyanoacrylate selon la revendication 1, le solvant étant de l'eau.

3. Utilisation d'un primaire pour cyanoacrylate selon la revendication 1, le solvant étant une solution aqueuse d'alcool.

4. Utilisation d'un primaire pour cyanoacrylate selon la revendication 1, le solvant étant un solvant organique tel qu'une cétone, un ester ou un hydrocarbure saturé ou similaire.

5. Utilisation d'un primaire pour cyanoacrylate selon la revendication 1, le solvant étant un mélange d'une solution aqueuse et d'un solvant organique tel qu'une cétone, un ester ou un hydrocarbure saturé ou similaire.

6. Utilisation d'un primaire pour cyanoacrylate selon les revendications 1 à 3, le groupe carboxyle ou le groupe acide sulfonique étant un ester avec utilisation d'un alcool inférieur.
